(19) Europäisches Patentamt / European Patent Office / Office européen des brevets

(11) **EP 4 650 742 A1**

(12) **EUROPEAN PATENT APPLICATION**
published in accordance with Art. 153(4) EPC

(43) Date of publication:
**19.11.2025 Bulletin 2025/47**

(21) Application number: **23916285.2**

(22) Date of filing: **26.12.2023**

(51) International Patent Classification (IPC):
**G01M 13/04** *(2019.01)* **F16C 33/58** *(2006.01)*

(52) Cooperative Patent Classification (CPC):
**F16C 33/58; G01M 13/04**

(86) International application number:
**PCT/JP2023/046723**

(87) International publication number:
**WO 2024/150672 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2023 JP 2023002416**

(71) Applicant: **NSK LTD.**
**Tokyo 141-8560 (JP)**

(72) Inventor: **ZHOU Kang**
**Fujisawa-shi, Kanagawa 251-8501 (JP)**

(74) Representative: **Grünecker Patent- und Rechtsanwälte**
**PartG mbB**
**Leopoldstraße 4**
**80802 München (DE)**

(54) **BEARING RACEWAY RING FLAKING DEVELOPMENT ANALYSIS METHOD, FLAKING DEVELOPMENT ANALYSIS DEVICE, AND PROGRAM**

(57) This flaking development analysis method involves: acquiring the presence or absence of flaking of a raceway ring and the shape of a flaked portion; calculating a rolling element load acting on a rolling element, in consideration of progression in the shape of the flaked portion, when the rolling element passes an exit portion of the flaked portion of the raceway ring, on the basis, at least, of the acquired shape of the flaked portion, the specifications of a rolling bearing, and the operating conditions of the rolling bearing; calculating a speed of development of flaking in consideration of progression in the shape of the flaked portion, on the basis of the rolling element load at the exit portion of the flaked portion; and calculating a relationship between elapsed time and the shape of the flaked portion on the basis of the speed of development of flaking.

FIG. 8

```
START
  │
  ▼
MONITOR FLAKING ── S801
  │
  ▼
FLAKING DETECTED? ── S802 ── NO
  │ YES
  ▼
INPUT SHAPE OF FLAKING, SPECIFICATIONS OF BEARING,
AND OPERATING CONDITIONS ── S803
  │
  ▼
CALCULATE LOAD ON ROLLING ELEMENT PASSING
THROUGH OUTLET PORTION OF FLAKING ── S804
  │
  ▼
CALCULATE CRACK PROPAGATION RATE TAKING INTO
ACCOUNT SHAPE OF PROGRESSING FLAKED PORTION ── S805
  │
  ▼
CALCULATE REMAINING TIME UNTIL FLAKING
BECOMES DESIGNATED SHAPE ── S806
  │
  ▼
OUTPUT
CALCULATION RESULT ── S807
  │
  ▼
END
```

**Description**

TECHNICAL FIELD

The present invention relates to a bearing raceway flaking propagation analysis method, a flaking analysis device, and a program.

BACKGROUND ART

In the related art, bearings have been used in various devices. A wind turbine generator is an example of the device that uses a bearing. In the case of large bearings such as a bearing for a wind turbine generator, installation and replacement are not easy, so even if an abnormality occurs in a component or the like, the component may continue to operate for a certain period of time.

For example, when the bearing is rotated under load, raceway surfaces of an inner ring and of an outer ring and rolling surfaces of rolling elements are constantly subjected to repeated loads, which can cause material fatigue and result in tiny scale-shaped damage called flaking. In general, the life of the bearing is defined as the time until the bearing becomes unusable due to the flaking. Even if flaking occurs while the bearing is in operation, the operation can be continued by reducing an operation load, such as by limiting a power generation amount, until a replacement component can be procured and installed. However, if the replacement is delayed and the flaking inside the bearing rapidly propagates, even if the abnormality is minor at the beginning, a flaked piece may get caught in a component such as a gear, or the inner or outer rings may be cracked. As a result, in the worst case scenario, there is a risk of fatal damage occurring, such as causing the entire device to stop. In addition, if such damage occurs, maintenance work that shuts down the device for an extended period of time may be required.

In order to avoid such a situation, for example, Patent Literature 1 discloses an analysis method for predicting expansion of micro-flaking after its occurrence and the time it will take, so that the device can be used in a safe state over a certain period of time after the occurrence of the micro-flaking. Further, Patent Literature 2 discloses a method for predicting a remaining life of a rolling bearing by using a fracture mechanics technique.

CITATION LIST

PATENT LITERATURE

Patent Literature 1: JP6844764B
Patent Literature 2: JP2017-219469A

SUMMARY OF INVENTION

TECHNICAL PROBLEM

In the method of Patent Literature 1, the prediction is made on the assumption that an axial width of the initial flaking is equal to an axial length of the rolling element. Therefore, when the axial width of the flaking is different from the axial length of the rolling element, the prediction accuracy may tend to decrease, that is, the remaining life may tend to become shorter. In addition, in Patent Literature 2, since the shape of the flaking that changes during operation is not considered, an error occurs in prediction on propagation rate of the flaking.

In view of the above problems, it is an object of the present invention to provide a bearing flaking propagation analysis method with improved prediction accuracy as compared with that in the related art.

SOLUTION TO PROBLEM

In order to solve the above problem, the present invention has the following configuration. That is, a flaking propagation analysis method for predicting propagation of flaking in a raceway of a rolling bearing used in a rotary machine, the rolling bearing having inner and outer raceways and a rolling element between the inner and outer raceways, the method including:

a step of acquiring, by a flaking condition acquisition unit, presence or absence of flaking on the raceway and a shape of a flaked portion;
a step of calculating, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;
a step of calculating, based on a rolling element load at the outlet portion of the flaked portion, a propagation rate of the flaking taking into account a shape of the flaked portion that is progressing; and
a step of calculating a relationship between an elapsed time and a shape of the flaked portion based on the propagation rate of the flaking,
in which the propagation rate of the flaking is calculated based on a surface pressure with respect to the outlet portion of the flaked portion, the surface pressure being derived from an escape amount of the rolling element in an axial direction generated according to a shape of the flaked portion.

Further, another aspect of the present invention has the following configuration. That is, a flaking propagation analysis device for predicting propagation of flaking in a raceway of a rolling bearing used in a rotary machine, the rolling bearing having inner and outer raceways and a rolling element between the inner and outer raceways, the device including:

a flaking condition acquisition unit configured to acquire presence or absence of flaking on the raceway and a shape of a flaked portion;

a load calculation unit configured to calculate, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;

a propagation rate calculation unit configured to calculate, based on a rolling element load at the outlet portion of the flaked portion, a propagation rate of the flaking taking into account a shape of the flaked portion that is progressing; and

a calculation unit configured to calculate a relationship between an elapsed time and a shape of the flaked portion based on the propagation rate of the flaking,

in which the propagation rate of the flaking is calculated based on a surface pressure with respect to the outlet portion of the flaked portion, the surface pressure being derived from an escape amount of the rolling element in an axial direction generated according to a shape of the flaked portion.

Further, another aspect of the present invention has the following configuration. That is, a program for causing a computer to execute:

a step of acquiring, by a flaking condition acquisition unit, presence or absence of flaking on a raceway of a rolling bearing and a shape of a flaked portion;

a step of calculating, based on at least the acquired shape of the flaked portion, specifications of the rolling bearing, and operating conditions of the rolling bearing, a rolling element load acting on a rolling element of the rolling bearing when the rolling element passes through an outlet portion of the flaked portion of the raceway, taking into account a shape of the flaked portion that is progressing;

a step of calculating, based on a rolling element load at the outlet portion of the flaked portion, a propagation rate of the flaking taking into account a shape of the flaked portion that is progressing; and

a step of calculating a relationship between an elapsed time and a shape of the flaked portion based on the propagation rate of the flaking,

in which the propagation rate of the flaking is calculated based on a surface pressure with respect to the outlet portion of the flaked portion, the surface pressure being derived from an escape amount of the rolling element in an axial direction generated according to a shape of the flaked portion.

ADVANTAGEOUS EFFECTS OF INVENTION

According to the present invention, it is possible to provide a bearing flaking propagation analysis method with improved prediction accuracy as compared with that in the related art.

BRIEF DESCRIPTION OF DRAWINGS

FIG. 1 is a block diagram showing a schematic configuration of a flaking propagation analysis device according to one embodiment of the present invention.

FIGS. 2A to 2E are diagrams illustrating propagation of flaking.

FIG. 3 is a graph illustrating an analysis result using an analysis method in the related art.

FIGS. 4A and 4B are diagrams illustrating escape of a roller and generation of concentrated surface pressure.

FIGS. 5A to 5C are diagrams illustrating dynamic FEM analysis taking into account inertia of a rolling element.

FIGS. 6A to 6F are exploded views showing an example of a result of the dynamic FEM analysis.

FIG. 7 is a graph illustrating an analysis result using an analysis method according to one embodiment of the present invention.

FIG. 8 is a flowchart of processing according to the embodiment of the present invention.

FIG. 9A is a conceptual diagram showing magnitude of a rolling element load before flaking occurs.

FIG. 9B is a conceptual diagram showing a change in the magnitude of the rolling element load after the flaking occurs.

FIG. 10A is an enlarged view showing a relationship between a flaked portion and rolling elements.

FIG. 10B is an enlarged view showing a relationship between the flaked portion and the rolling elements.

FIG. 11A is an enlarged view of a main part showing a state in which a rolling element passes through an outlet portion of the flaked portion.

FIG. 11B is a diagram showing stress distribution based on FEM analysis taking into account a shape of the flaked portion.

DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby showing a correspondence relationship therebetween.

Hereinafter, a flaking propagation analysis method and a flaking propagation analysis device for a raceway of a rolling bearing according to the embodiment of the present invention will be described in detail with reference to the drawings.

[Device Configuration]

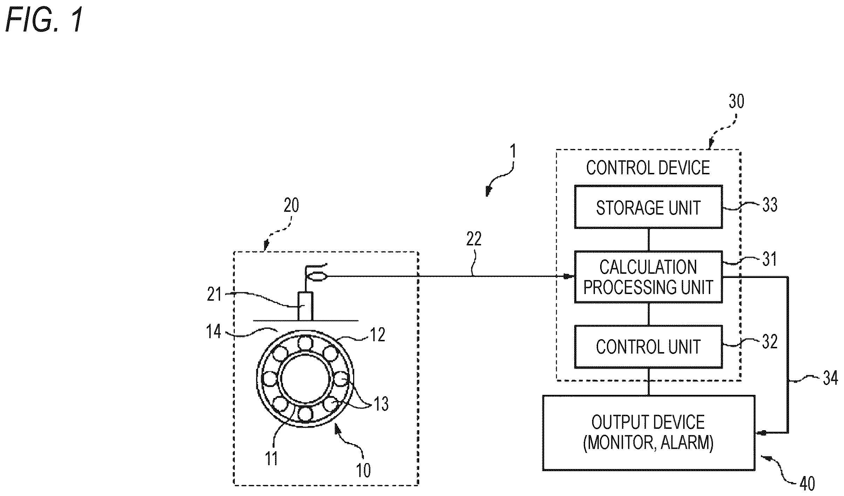

As shown in FIG. 1, a flaking propagation analysis device 1 for a raceway according to the present embodiment analyzes a flaked portion generated in inner and outer raceways (that is, an inner ring 11 or an outer ring 12) of a rolling bearing 10 incorporated in a mechanical facility 20. The flaking propagation analysis device 1 includes a control device 30 and an output device 40. The flaking propagation analysis device 1 is connected to the mechanical facility 20 to be analyzed via a data transmission unit 22.

A flaking condition acquisition unit 21 acquires the presence or absence and a shape of flaking of the rolling bearing 10. The flaking condition acquisition unit 21 may be installed in the mechanical facility 20 in advance, or may be configured to be detachable from the mechanical facility 20 and attached to the mechanical facility 20 during analysis. A calculation processing unit 31 receives a signal acquired by the flaking condition acquisition unit 21 via the data transmission unit 22, and processes the signal to determine the presence or absence of flaking on a raceway of the rolling bearing 10 and to analyze the propagation of the flaking. In the present embodiment, a subject that executes the analysis processing according to the present embodiment is collectively shown as the calculation processing unit 31, but may be configured as a separate processing unit for each processing step. A control unit 32 controls the driving of the mechanical facility 20. The operation of the mechanical facility 20 may be controlled by a different device, and in this case, the control unit 32 of the control device 30 may be configured to acquire a parameter related to control from the device. A storage unit 33 stores various data and programs related to analysis, analysis results, and the like. The output device 40 includes a monitor, an alarm, and the like, and outputs a flaking propagation analysis result and a remaining life of the rolling bearing 10.

The rolling bearing 10 includes the inner ring 11 externally fitted to a rotation shaft of the mechanical facility 20, an outer ring 12 internally fitted to a housing 14 or the like, a plurality of rolling elements 13 arranged with freedom to roll between the inner ring 11 and the outer ring 12, and a cage (not shown) that rollably holds the rolling elements 13.

The flaking condition acquisition unit 21 is selected freely according to a method for acquiring the flaking condition. For example, the flaking condition acquisition unit 21 may be a fiber scope or a camera, and the shape of the flaked portion may be directly observed. Alternatively, a vibration sensor, a load sensor, a displacement sensor, or the like may be used as the flaking condition acquisition unit 21, and the flaking condition acquisition unit 21 may detect a temperature, an iron powder amount (concentration) in the lubricating oil, or the like. The vibration sensor, the load sensor, and the displacement sensor are fixed to a load area of the housing 14 to which the outer ring 12, which is a fixed ring of the rolling bearing 10, is attached. Further, the flaking condition acquisition unit 21 is not limited to being implemented by one acquisition unit, and may be implemented by combining a plurality of types of acquisition units.

The calculation processing unit 31 and the control unit 32 of the control device 30 are implemented by, for example, a microcomputer (an IC chip, a central processing unit (CPU), a micro processing unit (MPU), a digital signal processor (DSP), and the like), and each process described later is executed by a program of the microcomputer.

The control device 30 stores an analysis result of the flaked portion of the rolling bearing 10 analyzed by the calculation processing unit 31 in the storage unit 33, outputs the operation of the mechanical facility 20 to the control unit 32, and feeds back a control signal for driving the mechanical facility 20 according to the analysis result to the operation of the mechanical facility 20 (safety operating operation such as reducing a rotation speed). Further, the control device 30 sends the analysis result to the output device 40 by the data transmission unit 34 that uses wired or wireless network. The storage unit 33 includes a volatile or non-volatile storage device, and is configured to be able to store and refer to various programs and data according to the present embodiment. The storage unit 33 may include, for example, a random access memory (RAM), a read only memory (ROM), a hard disk drive (HDD), and the like, and the configuration thereof is not particularly limited.

The output device 40 displays the analysis result of the rolling bearing 10 on a monitor or the like in real time. When an abnormality is detected, an alarm such as a light or a buzzer may be used to alert an operator to the abnormality. In addition, the data transmission unit 22 for the signal may be wired or wireless taking into consideration a network, as long as it can accurately transmit and receive a signal from the flaking condition acquisition unit 21.

[Analysis Method]

An analysis method according to the present embodiment will be described. First, a method in the related art to be compared with the analysis method according to the present embodiment and improvement points thereof will be described.

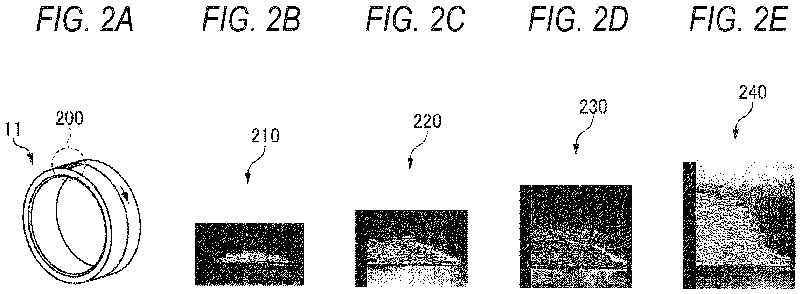

FIGA. 2A to 2E are diagrams illustrating an example of propagation condition of flaking that occurs on a raceway surface of the inner ring 11, which is a rotating ring that forms the rolling bearing 10. FIG. 2A is an external perspective view of only the inner ring 11 of the rolling bearing 10. Here, the propagation of the flaking that occurs at a position 200 will be described. Here, an example of a self-aligning roller bearing in which rolling elements have a barrel shape is shown. The flaking occurs on a raceway surface where contact occurs between the inner ring 11 and the rolling element 13, and propagates as the rolling bearing 10 is used. Images 210 to 240 shown in FIGS. 2B to 2E show the propagation condition of the flaking. In the images 210 to 240, a left-right direction corresponds to an axial direction, and an upper-lower direction corresponds to a circumferential direction. As shown in the images 210 to 240, as the flaking propagates, a range (axial direction and circumferential direction) gradually increases.

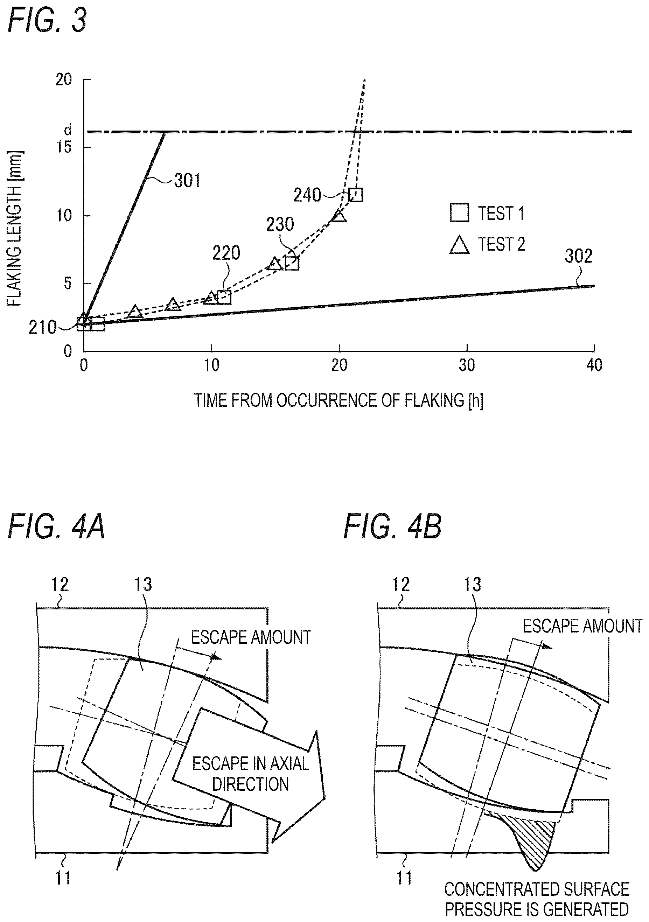

FIG. 3 is a graph for illustrating a correspondence relationship between a prediction result of propagation of the flaking by a method in the related art and an actual propagation result. Here, the method in the related art will be described using Patent Literature 1 and Patent Literature 2. In FIG. 3, the vertical axis indicates a length [mm] of the flaking in a rotation direction (circumferential direction) of a rotating ring, and the horizontal axis indicates the passage of time [h] from the occurrence of the flaking. The reference numbers of the plots shown in the graph correspond to the reference numbers of the images in FIGA. 2A to 2E. In addition, d indicates a pitch between rollers which are the rolling elements.

Here, measurement results of two tests are compared with the prediction results obtained by the method in the related art. In each test, flaking occurred on the raceway surface of the inner ring due to the rollers, and the general condition was similar to that shown in each image of FIGA. 2A to 2E. A straight line 301 indicates a prediction result of the propagation of flaking based on the method of Patent Literature 1 as the method in the related art. A straight line 302 indicates a prediction result of the propagation of flaking based on the method of Patent Literature 2 as the method in the related art.

FIGS. 4A and 4B is a diagram for illustrating escape in the axial direction of the rolling element 13 (the barrel-shaped roller in this example) and the generation of concentrated surface pressure when the flaking occurs. As shown in FIG. 4A, when flaking occurs on the raceway surface, the rolling element 13 moves in the axial direction (hereinafter referred to as "escape"). An escape amount here varies depending on the condition (shape or the like) of the flaking. In a state where the rolling element 13 has escaped, when the rolling element 13 escapes from a region of the flaking due to rotation of the rotating ring and the rolling element 13, concentrated surface pressure is generated around a boundary between the region of the flaking and other regions.

For example, as illustrated in FIGA. 2A to 2E, in an early stage of the flaking (for example, the image 210), the flaking propagates in a direction of the rotation shaft. At this stage, the rolling element 13 begins to escape as described with reference to FIG. 4A, and the concentrated surface pressure is generated when the rolling element 13 escapes from the flaking. For example, in the method according to Patent Literature 2, the shape of the flaking associated with such concentrated surface pressure is not taken into consideration. Therefore, there is a drawback that a propagation rate of the flaking is underestimated, as indicated by the straight line 302 in FIG. 3.

Further, in the method according to Patent Literature 1, the balance of forces is calculated taking into account the shape of the flaking, and a load on the rolling element at the time of escaping from the region of the flaking is calculated. However, since motion analysis that takes into account the inertia of the rolling element is not provided, it is not possible to predict a phenomenon in which the escape of the rolling element and the concentrated surface pressure gradually increase as the flaking propagates. Therefore, as indicated by the straight line 301 in FIG. 3, there is a drawback that the propagation rate of the flaking is overestimated.

Therefore, the analysis method according to the present embodiment provides an analysis method that takes into account the escape of the rolling elements and the concentrated surface pressure that accompany a change in the shape of the flaking. In the present embodiment, the dynamic finite element method (FEM) analysis is used to specify parameters of the escape amount of the rolling element and the concentrated surface pressure, and the parameters are reflected in the analysis result.

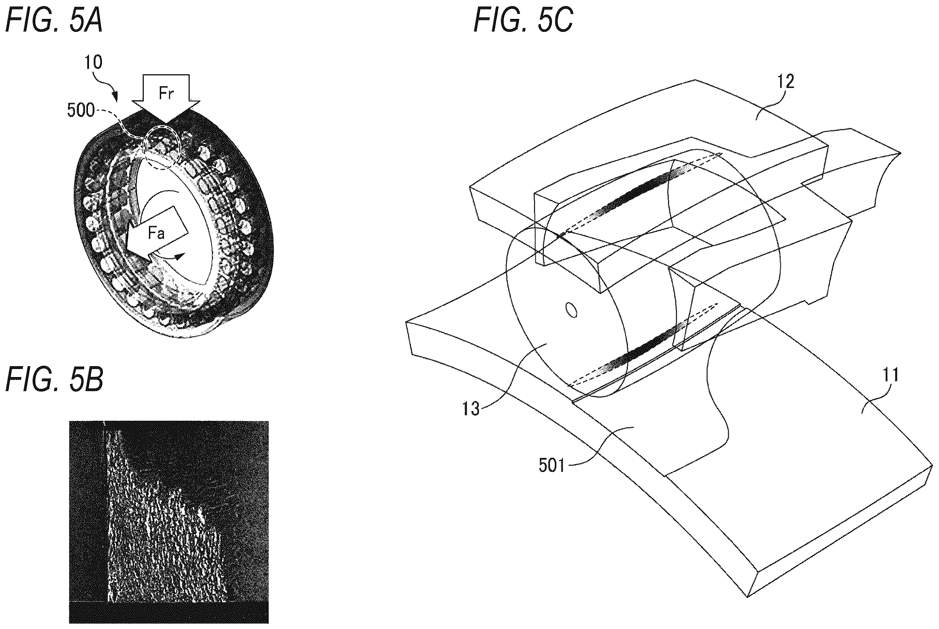

FIGS. 5A to 5C are diagrams for illustrating the dynamic FEM analysis that takes into account the inertia of the rolling element used in the present embodiment. FIG. 5A is an external perspective view of a self-aligning roller bearing serving as the rolling bearing 10. Fa indicates an axial load on the rolling bearing 10, and Fr represents a radial load on the rolling bearing 10. FIG. 5B is an image of a flaking region on the raceway surface of the rotating ring in a region 500 in FIG. 5A. In the image of FIG. 5B, a left-right direction corresponds to the rotation direction of the rotating ring, and an upper-lower direction corresponds to a direction of the rotation shaft.

FIG. 5C is an enlarged model diagram of the region 500. The rolling element 13 (roller in this example) is disposed between the outer ring 12 and the inner ring 11. A flaking region 501 is formed on the raceway surface of the inner ring 11. In the present embodiment, the surface pressure due to contact between the members is derived by performing the dynamic FEM analysis. The gradation shown around the rolling element 13 in FIG. 5C indicates the surface pressure derived by the dynamic FEM analysis, with darker colors indicating higher surface pressure. Here, the surface pressure due to contact between the rolling element 13 and the outer ring 12, and between the rolling element 13 and the inner ring 11 is shown.

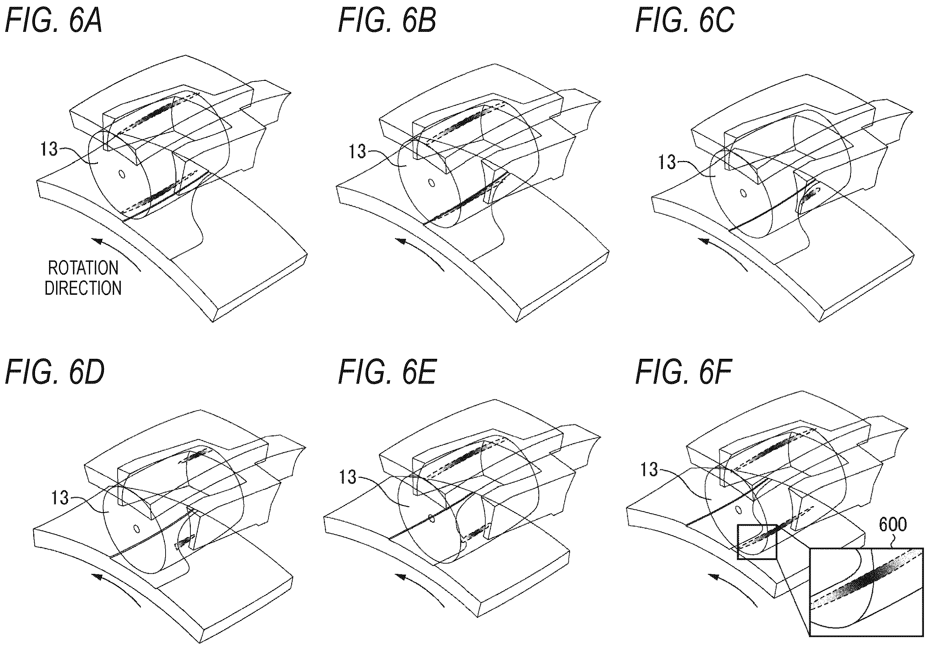

FIGS. 6A to 6F are diagrams for illustrating transition of the surface pressure and generation of concentrated surface pressure based on the dynamic FEM analysis. Here, an example in which the rolling bearing 10 operates in a state where the flaking has occurred is shown. The surface pressure changes in the order from FIGS. 6A to 6F, and is shown in gradation in the same manner as FIG. 5C.

FIG. 6A shows a state in which the rolling element 13 is positioned outside the flaking region. In this state, the rolling element does not escape. FIG. 6B shows a state immediately before the rolling element 13 enters the flaking region. FIG. 6C shows a state in which the rolling element 13 escapes from a part of the flaking region (a narrow region on the right in the drawing). In this case, it is assumed that the rolling element 13 escapes toward a wide region on the left side in the drawing, and therefore the surface pressure at the time of escape is relatively reduced. Due to the occurrence of the escape, the surface pressure between the outer ring 12 and the rolling element 13 is also reduced. FIGS. 6D and 6E show states in which the rolling element has escaped from the flaking region from the state shown in FIG. 6D. At this time, the surface pressure between the rolling element 13 and the inner ring 11 gradually increases. The surface pressure and a contact range between the rolling element 13 and the outer ring 12 also vary. FIG. 6F shows a state in which the rolling element 13 has completely escaped from the flaking region. At this time, as the escape of the rolling element 13 occurred on the wide region on the left side in the drawing is eliminated, concentrated surface pressure is generated around a boundary between the flaking region and other regions.

In the present embodiment, parameters of the escape amount in the axial direction and the concentrated surface pressure are derived based on the result of the dynamic FEM analysis and are used for prediction. A more detailed derivation method will be described later together with a processing flow.

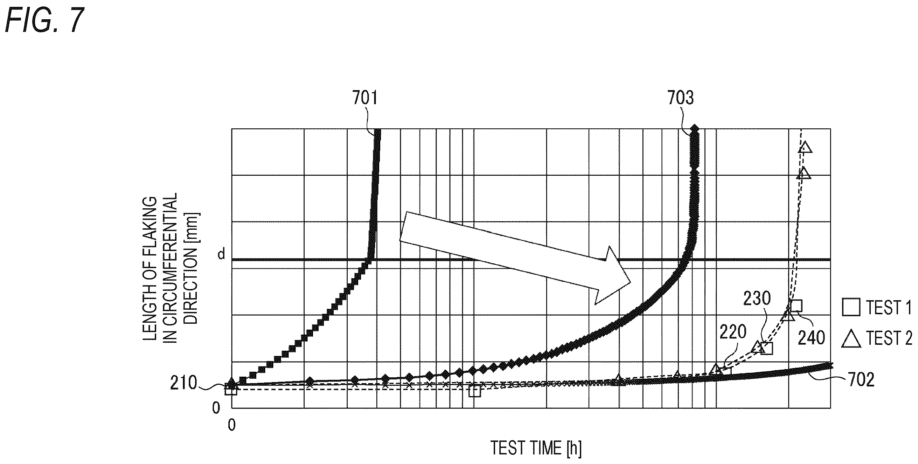

FIG. 7 is a semi-logarithmic graph for illustrating the correspondence relationship among a prediction result of the propagation of the flaking by the method according to the present embodiment, a prediction result of the propagation of the flaking by the method in the related art, and an actual propagation result. Here, the method in the related art will be described using Patent Literature 1 and Patent Literature 2 as in FIGS. 2A to 2E. In FIG. 7, the vertical axis indicates a length [mm] of the flaking in a rotation direction (circumferential direction) of a rotating ring, and the horizontal axis indicates the passage of test time [h]. The reference numbers of the plots shown in the graph correspond to the reference numbers of the images in FIGS. 2A to 2E. In addition, d indicates a pitch between rollers which are the rolling elements.

Here, measurement results of two tests are compared with the prediction results obtained by the method according to the present embodiment and by the method in the related art. In each test, flaking occurred on the raceway surface of the inner ring due to the rollers, and the general condition was similar to that shown in each image of FIGS. 2A to 2E. A curve 701 indicates a prediction result of the propagation of flaking based on the method of Patent Literature 1 as the method in the related art. A curve 702 indicates a prediction result of the propagation of flaking based on the method of Patent Literature 2 as the method in the related art. A curve 703 indicates a prediction result of the propagation of flaking based on the method according to the present embodiment.

Referring to FIG. 7, the prediction result (curve 703) by the method according to the present embodiment is able to predict an actual timing of occurrence of flaking more closely than the prediction result (curve 701) by the method in the related art. Further, the prediction result (curve 703) by the method according to the present embodiment more accurately represents the degree of change (curvature) that represents the actual propagation of flaking than the prediction result (curve 702) by the method in the related art. Therefore, by the analysis method according to the present embodiment, it is possible to more accurately predict the actual propagation condition of the flaking as compared with the method in the related art.

[Processing Flow]

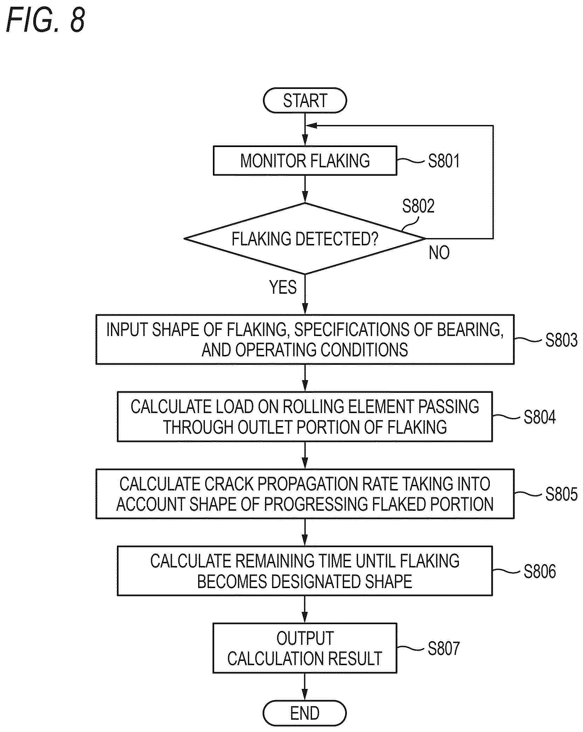

FIG. 8 is a flowchart of analysis processing according to the present embodiment. The processing is executed by the control device 30 of the flaking propagation analysis device 1, and may be implemented by, for example, reading out a program for implementing the processing according to the present embodiment from the storage unit 33 and executing the program by the calculation processing unit 31 included in the control device 30. The processing may be started with the start of operation of the rolling bearing 10, or may be started based on an instruction from a user while the rolling bearing 10 is in operation. The processing flow may be configured to be periodically executed.

In S801, the control device 30 monitors the flaking by acquiring the presence or absence and a shape of the flaking by the flaking condition acquisition unit 21. For example, when the flaking condition acquisition unit 21 is a fiber scope, the raceway surface is directly observed. The monitoring of the flaking is not limited to the direct observation, and may be indirect monitoring performed based on an index defined based on specifications or operating conditions of the rolling bearing 10.

In S802, the control device 30 determines whether the flaking is detected based on the information acquired by the flaking condition acquisition unit 21. The criterion for determining whether the flaking occurs may be defined in advance. For example, it may be determined whether a flaked portion has occurred in an early stage before the state of FIG. 2B. When the flaking is detected (YES in S802), the process performed by the control device 30 proceeds to S803. On the other hand, when the flaking is not detected (NO in S802), the process performed by the control device 30 returns to S801 and continues the monitoring.

In S803, the control device 30 specifies the shape of the flaking that has occurred, the specifications of the rolling bearing 10, and the operating conditions of the rolling bearing 10 as input parameters, and inputs the input parameters to a calculation program according to the present embodiment. The shape of the flaking is specified based on the information acquired by the flaking condition acquisition unit 21, and may include, for example, an area, a circumferential length, a length in the axial direction, and the like of the flaking. The specifications of the rolling bearing 10 may be defined in advance and held in the storage unit 33 or the like. The operating conditions may be set in advance, or may be set based on information obtained from a sensor (not illustrated) or the like. Other information related to the flaking may be used, including, for example, vibration, temperature, an amount (concentration) of iron particles in the lubricant, and the like.

As the bearing load, which is one of the operating conditions, a constant bearing load, a bearing load directly measured, a bearing load indirectly obtained from a power generation output, a rotational torque of a shaft, or the like may be used. Also, a driving load pattern assumed in advance may be input. In addition, as the rotation speed, a current rotation speed may be input on the assumption that the operation is continuously performed at the current rotation speed, or when the operation speed is decelerated at the time when an initial flaked portion is observed, the decelerated rotation speed may be input.

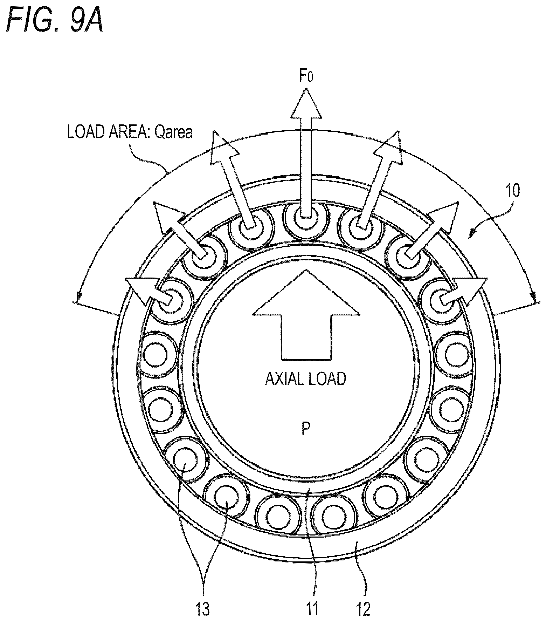

In S804, the control device 30 calculates a load F on the rolling element 13 passing through an outlet portion of the flaked portion among the flaked portion that has occurred in the rolling bearing 10. The load may be calculated based on the index (for example, the shape of the initial flaking, the specifications of the rolling bearing, the operating conditions, and the like) input in S803. Here, the load F on the rolling element 13 is calculated by a calculation method according to ISO/TS16281. More specifically, as illustrated in FIG. 9A, since an axial load P pushes the inner ring 11 and simultaneously pushes the plurality of rolling elements 13, the load F on the rolling elements 13 at the outlet portion of the flaked portion is calculated by solving the balance of the forces.

As illustrated in FIG. 9A, when the rolling bearing 10 rotates in a state where a radial bearing load is applied to the inner ring 11 due to the axial load P, a rolling element load $F_0$ having a magnitude corresponding to the position of the rolling element 13 is generated in each of the plurality of rolling elements 13 located in a load area $Q_{arca}$.

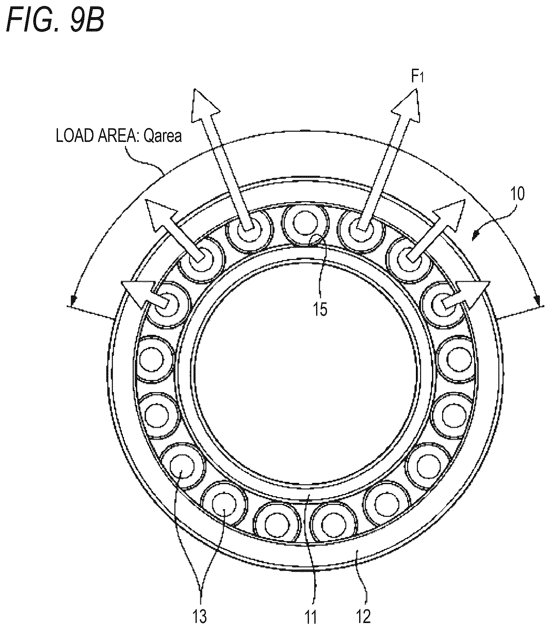

On the other hand, it is assumed that flaking occurs on the raceway surface of the inner ring 11 at the center of the load area $Q_{arca}$ where contact surface pressure between the rolling elements 13 and the raceway surface of the inner ring 11 is maximum. In this case, as illustrated in FIG. 9B, the rolling element 13 passing through the flaked portion 15 cannot support the bearing load, and the bearing load is supported by a smaller number of rolling elements 13 than the rolling elements 13 in the load area $Q_{arca}$ illustrated in FIG. 9A. Therefore, an increased rolling element load $F_1$ is applied to the rolling elements 13 located in the other load areas $Q_{arca}$. Therefore, by solving the force balancing equation in FIG. 9B using the relationship of the rolling element load $F_0$ of the rolling element 13 in FIG. 9A, the rolling element load F at the outlet portion of the flaked portion in the state where the initial flaked portion has occurred is calculated. Specifically, the rolling element loads $F_0$ and $F_1$ are obtained by a calculation method according to ISO/TS16281. In addition, the rolling element load $F_1$ of the rolling element 13 passing through the flaked portion 15 is calculated as not receiving a load.

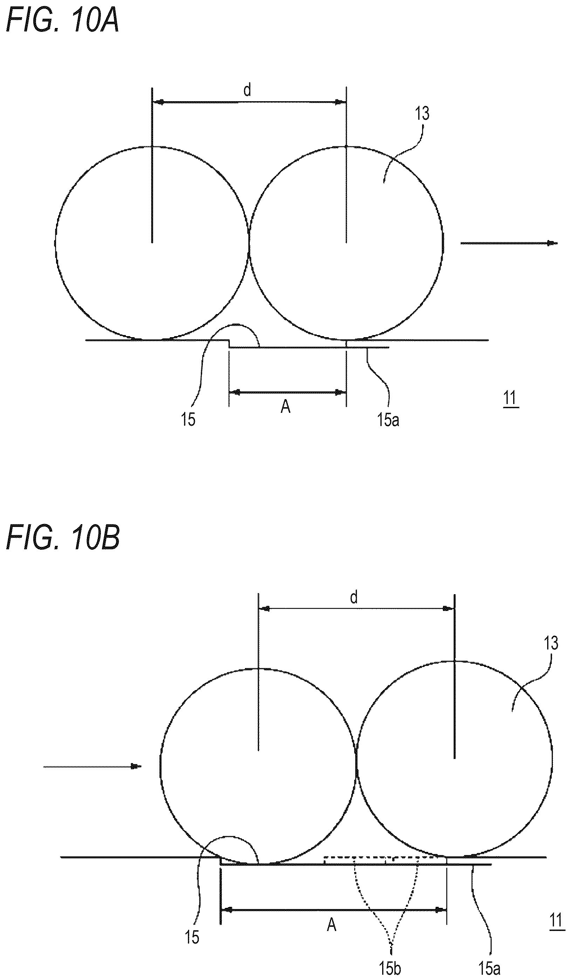

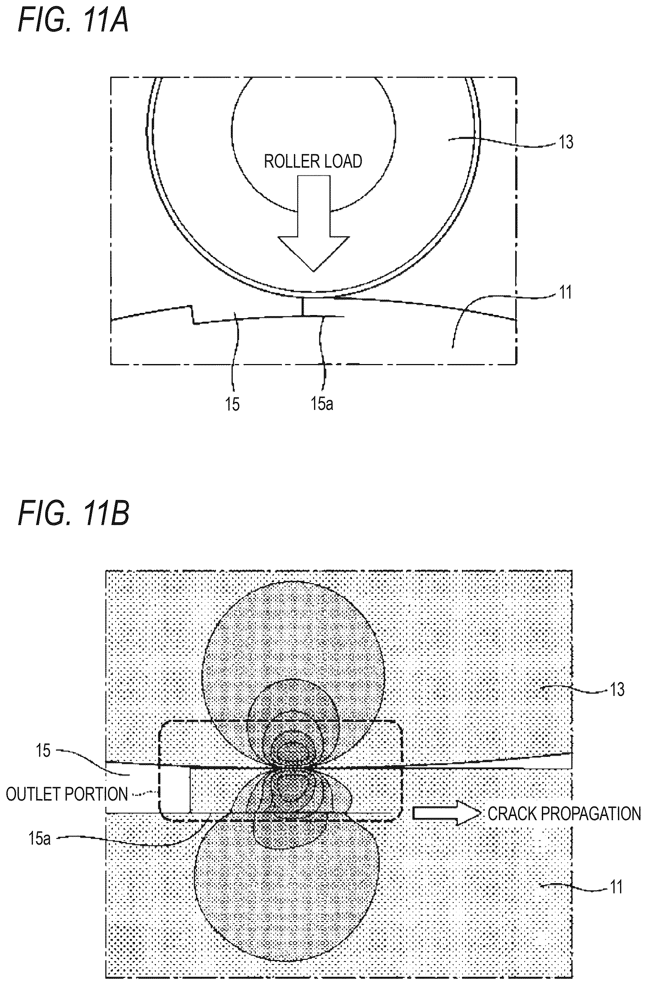

Further, the initial flaked portion that occurs at the center of the load area $Q_{arca}$ expands in a circumferential direction of the raceway surface (in the example shown in the present embodiment, a passing direction of the rolling element 13). Normally, as the rolling element load is repeatedly applied to a crack 15a (see FIGS. 10A, 10B, 11A, and 11B) at the outlet portion of the flaked portion 15, the crack 15a gradually propagates in the circumferential direction as indicated by the arrow shown in FIG. 11B, and then a flaked piece 15b having a predetermined length is generated in stages. As shown in FIG. 10B, when the circumferential length A of the flaked portion 15 becomes a length that allows two adjacent rolling elements 13 to enter at the same time (circumferential length A=, pitch distance d of the rolling elements), the rolling element load $F_1$ at the outlet portion of the flaked portion 15 increases and is applied.

In S805, based on the rolling element load calculated in S803, the control device 30 performs crack propagation analysis takes into account the shape of the progressing flaking, and calculates a propagation rate of the crack as a speed at which the flaking expands (flaking propagation rate V). The calculation method here uses the parameters of the concentrated surface pressure specified by the result of the dynamic FEM analysis as described above.

A crack propagation behavior in the fatigue phenomenon is governed by a linear fracture mechanical parameter K (stress intensity factor), which is represented by a crack length and a stress acting on the crack. It is known that in a region where the crack stably grows, a variation range $\Delta K$ of the stress intensity factor K (stress intensity factor variation range) and a crack propagation rate da/dN per stress cycle have a double logarithmic linear relationship, as shown below in Paris law.

$$da/dN = C(\Delta K)^m \quad (1)$$

$\Delta K$: stress intensity factor variation range
C, m: experimental constants

Therefore, in the present embodiment, by substituting $\Delta K$ into the above equation (1), the crack propagation rate can be obtained by calculation as the flaking propagation rate V. In the present embodiment, taking into consideration the concentrated surface pressure described above, $\Delta K$ is defined using the following equation (2).
[Math. 1]

$$\Delta K = P_0 F_c \sqrt{\pi a} \quad \cdot \cdot \cdot (2)$$

$P_0$: maximum surface pressure of rolling element (concentrated surface pressure)
a: circumferential crack length
$F_c$: proportional coefficient
$\pi$: circumference

The proportional coefficient $F_c$ can be obtained in advance from the result of static FEM analysis. More specifically, the stress distribution at a tip end of the crack in an edge portion when the roller comes into contact with the flaked edge is calculated by the static FEM analysis, and the stress intensity factor variation range $\Delta K$ for finding $F_c$ can be derived in advance from the stress distribution. FIG. 11B shows the concept of the stress distribution around a contact position between the rolling element and the crack portion. In the present embodiment, a concentrated surface pressure $P_0$ is calculated from the escape amount and substituted for $P_0$ in the above equation (2), so that a change in the flaking propagation rate is reflected in an estimation result of the remaining life. The flaking propagation rate (crack propagation rate) V may be a J integral value that is generally used in fracture mechanics and formulated in advance. In this case as well, the formulation is performed using the concentrated surface pressure based on the escape amount of the rolling element calculated from the dynamic FEM analysis.

In S806, the control device 30 applies the bearing specifications such as the number of rolling elements 13 and the operating conditions such as the rotation speed to the obtained crack propagation rate da/dN per stress cycle, and calculates the relationship between an operating time and a flaking size A from theoretical calculation using the following equation (3).

$$A = A_0 + da/dN \times n \quad (3)$$

$A_0$: circumferential length of flaked portion at the time of observation
n: the number of times that rolling element loads outlet portion of flaked portion within load area

Based on the calculated relationship, the control device 30 calculates, as the remaining life of the rolling bearing 10, a remaining time until the flaking shape input in S803 becomes a predetermined flaking shape (in the above description, the circumferential length). The predetermined flaking shape may be designated in advance or may be received in this step. In addition, in a case where it is predicted that the flaking is rapidly expanded before reaching the predetermined flaking shape, that is, in a case where it is predicted that the crack propagation rate is rapidly increased, the remaining time may be calculated to be the time before the crack propagation rate increases rapidly. As a result, a period before the timing at which the behavior of the rolling bearing 10 may rapidly deteriorate can be treated as the remaining life.

In S807, the control device 30 outputs the result calculated in S806. Then, the processing flow ends. The output method here is not particularly limited, and the analysis result may be visually displayed on a monitor, which is the output device 40, or may be audibly output by an alarm. In addition, the parameters of the analysis result may be output to an external device to be reused in other processes. The analysis processing according to the present embodiment may be ended together with a notification when the calculated remaining life falls below a predetermined threshold, or may be continued while the operation of rolling bearing 10 is continued.

The procedure of the flowchart in FIGS. 4A and 4B described above may be carried out by calculating in advance for specifications of each rolling bearing, up to the maximum length of flaked portion expected as the bearing life under the predetermined operating conditions, and storing the data of the calculation results in a table in the storage unit 33. As a result, a part of the processing may be omitted at the time of analysis, and the processing load can be reduced.

As described above, according to the present embodiment, it is possible to analyze the propagation of flaking in a bearing with improved prediction accuracy as compared with the related art.

As described above, the following matters are disclosed in the present specification.

(1) A rolling bearing raceway flaking propagation analysis method that is a flaking propagation analysis method for predicting propagation of flaking in a raceway of a rolling bearing used in a rotary machine, the rolling bearing having inner and outer raceways and a rolling element between the inner and outer raceways, the rolling bearing raceway flaking propagation analysis method including:

a step of acquiring, by a flaking condition acquisition unit, presence or absence of flaking on the raceway and a shape of a flaked portion;

a step of calculating, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;

a step of calculating, based on a rolling element load at the outlet portion of the flaked portion, a propagation rate of the flaking taking into account a shape of the flaked portion that is progressing; and

a step of calculating a relationship between an elapsed time and a shape of the flaked portion based on the propagation rate of the flaking, in which the propagation rate of the flaking is calculated based on a surface pressure with respect to the outlet portion of the flaked portion, the surface pressure being derived from an escape amount of the rolling element in an axial direction generated according to a shape of the flaked portion.

According to this configuration, it is possible to analyze the propagation of flaking in a bearing with improved prediction accuracy as compared with the related art. In particular, it is possible to predict the propagation of flaking more accurately by taking into account the concentrated surface pressure based on the movement (escape) of the rolling element in the axial direction that occurs depending on the shape of the flaked portion.

(2) In the rolling bearing raceway flaking propagation analysis method according to (1), the escape amount of the rolling element is determined by dynamic finite element method (FEM) analysis.

According to this configuration, the escape amount of the rolling element can be appropriately derived from the result of the dynamic FEM analysis.

(3) In the rolling bearing raceway flaking propagation analysis method according to (1) or (2), the propagation rate of the flaking is calculated by using [Math 2].

$$da/dN = C(\Delta K)^m$$

$$\Delta K = P_0 F_c \sqrt{\pi a}$$

da/dN: crack propagation rate
$\Delta K$: stress intensity factor variation range
C, m: experimental constants
$P_0$: maximum surface pressure of rolling element (concentrated surface pressure)
a: circumferential crack length
$F_c$: proportional coefficient

$\pi$: circumference

According to this configuration, it is possible to predict the propagation of flaking more accurately by taking into account the concentrated surface pressure based on the movement (escape) of the rolling element in the axial direction that occurs depending on the shape of the flaked portion.

(4) The rolling bearing raceway flaking propagation analysis method according to any one of (1) to (3), further including: a step of outputting a remaining time until a flaked portion of a predetermined shape is reached as a remaining life.

According to this configuration, by treating the remaining time until the flaking becomes a desired shape as the life, it is possible to predict the time until the flaking becomes any shape.

(5) A rolling bearing raceway flaking propagation analysis device that is a flaking propagation analysis device for predicting propagation of flaking in a raceway of a rolling bearing used in a rotary machine, the rolling bearing having inner and outer raceways and a rolling element between the inner and outer raceways, the rolling bearing raceway flaking propagation analysis device including:

a flaking condition acquisition unit configured to acquire presence or absence of flaking on the raceway and a shape of a flaked portion;

a load calculation unit configured to calculate, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;

a propagation rate calculation unit configured to calculate, based on a rolling element load at the outlet portion of the flaked portion, a propagation rate of the flaking taking into account a shape of the flaked portion that is progressing; and

a calculation unit configured to calculate a relationship between an elapsed time and a shape of the flaked portion based on the propagation rate of the flaking, in which the propagation rate of the flaking is calculated based on a surface pressure with respect to the outlet portion of the flaked portion, the surface pressure being derived from an escape amount of the rolling element in an axial direction generated according to a shape of the flaked portion.

According to this configuration, it is possible to analyze the propagation of flaking in a bearing with improved prediction accuracy as compared with the related art. In particular, it is possible to predict the propagation of flaking more accurately by taking into account the concentrated surface pressure based on the movement (escape) of the rolling element in the axial direction that occurs depending on the shape of the flaked portion.
(6) A program for causing a computer to execute:

a step of acquiring, by a flaking condition acquisition unit, presence or absence of flaking on a raceway of a rolling bearing and a shape of a flaked portion;
a step of calculating, based on at least the acquired shape of the flaked portion, specifications of the rolling bearing, and operating conditions of the rolling bearing, a rolling element load acting on a rolling element of the rolling bearing when the rolling element passes through an outlet portion of the flaked portion of the raceway, taking into account a shape of the flaked portion that is progressing;
a step of calculating, based on a rolling element load at the outlet portion of the flaked portion, a propagation rate of the flaking taking into account a shape of the flaked portion that is progressing; and
a step of calculating a relationship between an elapsed time and a shape of the flaked portion based on the propagation rate of the flaking,
in which the propagation rate of the flaking is calculated based on a surface pressure with respect to the outlet portion of the flaked portion, the surface pressure being derived from an escape amount of the rolling element in an axial direction generated according to a shape of the flaked portion.

According to this configuration, it is possible to analyze the propagation of flaking in a bearing with improved prediction accuracy as compared with the related art. In particular, it is possible to predict the propagation of flaking more accurately by taking into account the concentrated surface pressure based on the movement (escape) of the rolling element in the axial direction that occurs depending on the shape of the flaked portion.
Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.
The present application is based on a Japanese patent application (No. 2023-002416) filed on January 11, 2023, contents of which are incorporated herein by reference.

REFERENCE SIGNS LIST

1 flaking propagation analysis device
10 rolling bearing
11 inner ring
12 outer ring
13 rolling element
14 housing
20 mechanical facility
22 data transmission unit
30 control device
31 calculation processing unit
32 control unit
33 storage unit
34 data transmission unit
40 output device

**Claims**

1. A rolling bearing raceway flaking propagation analysis method that is a flaking propagation analysis method for predicting propagation of flaking in a raceway of a rolling bearing used in a rotary machine, the rolling bearing having inner and outer raceways and a rolling element between the inner and outer raceways, the rolling bearing raceway flaking propagation analysis method comprising:

a step of acquiring, by a flaking condition acquisition unit, presence or absence of flaking on the raceway and a shape of a flaked portion;
a step of calculating, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;
a step of calculating, based on a rolling element load at the outlet portion of the flaked portion, a propagation rate of the flaking taking into account a shape of the flaked portion that is progressing; and
a step of calculating a relationship between an elapsed time and a shape of the flaked portion based on the propagation rate of the flaking,
wherein the propagation rate of the flaking is calculated based on a surface pressure with respect to the outlet portion of the flaked portion, the surface pressure being derived from an escape amount of the rolling element in an axial direction generated according to a shape of the flaked portion.

2. The rolling bearing raceway flaking propagation analysis method according to claim 1, wherein the escape amount of the rolling element is determined by dynamic finite element method (FEM) analysis.

3. The rolling bearing raceway flaking propagation analysis method according to claim 1 or 2,

   wherein the propagation rate of the flaking is calculated by using [Math 1],

$$d\,a\,/\,d\,N = C\,(\Delta K)^{m}$$

$$\Delta K = P_0 F_c \sqrt{\pi a}$$

   where
   da/dN: crack propagation rate
   $\Delta K$: stress intensity factor variation range
   C, m: experimental constants
   $P_0$: maximum surface pressure of rolling element (concentrated surface pressure)
   a: circumferential crack length
   $F_c$: proportional coefficient
   $\pi$: circumference.

4. The rolling bearing raceway flaking propagation analysis method according to claim 1 or 2, further comprising:
   a step of outputting a remaining time until a flaked portion of a predetermined shape is reached as a remaining life.

5. A rolling bearing raceway flaking propagation analysis device that is a flaking propagation analysis device for predicting propagation of flaking in a raceway of a rolling bearing used in a rotary machine, the rolling bearing having inner and outer raceways and a rolling element between the inner and outer raceways, the rolling bearing raceway flaking propagation analysis device comprising:

   a flaking condition acquisition unit configured to acquire presence or absence of flaking on the raceway and a shape of a flaked portion;
   a load calculation unit configured to calculate, based on at least the acquired shape of the flaked portion, specifications of the rolling bearing, and operating conditions of the rolling bearing, a rolling element load acting on the rolling element when the rolling element passes through an outlet portion of the flaked portion of the raceway, taking into account a shape of the flaked portion that is progressing;
a propagation rate calculation unit configured to calculate, based on a rolling element load at the outlet portion of the flaked portion, a propagation rate of the flaking taking into account a shape of the flaked portion that is progressing; and
a calculation unit configured to calculate a relationship between an elapsed time and a shape of the flaked portion based on the propagation rate of the flaking,
wherein the propagation rate of the flaking is calculated based on a surface pressure with respect to the outlet portion of the flaked portion, the surface pressure being derived from an escape amount of the rolling element in an axial direction generated according to a shape of the flaked portion.

6. A program for causing a computer to execute:

   a step of acquiring, by a flaking condition acquisition unit, presence or absence of flaking on a raceway of a rolling bearing and a shape of a flaked portion;
   a step of calculating, based on at least the acquired shape of the flaked portion, specifications of the rolling bearing, and operating conditions of the rolling bearing, a rolling element load acting on a rolling element of the rolling bearing when the rolling element passes through an outlet portion of the flaked portion of the raceway, taking into account a shape of the flaked portion that is progressing;
   a step of calculating, based on a rolling element load at the outlet portion of the flaked portion, a propagation rate of the flaking taking into account a shape of the flaked portion that is progressing; and
   a step of calculating a relationship between an elapsed time and a shape of the flaked portion based on the propagation rate of the flaking,
   wherein the propagation rate of the flaking is calculated based on a surface pressure with respect to the outlet portion of the flaked portion, the surface pressure being derived from an escape amount of the rolling element in an axial direction generated according to a shape of the flaked portion.

*FIG. 1*

*FIG. 2A*   *FIG. 2B*   *FIG. 2C*   *FIG. 2D*   *FIG. 2E*

EP 4 650 742 A1

## FIG. 3

## FIG. 4A

## FIG. 4B

FIG. 5A

FIG. 5B

FIG. 5C

FIG. 6A

FIG. 6B

FIG. 6C

FIG. 6D

FIG. 6E

FIG. 6F

13

ROTATION
DIRECTION

600

FIG. 7

LENGTH OF FLAKING IN CIRCUMFERENTIAL DIRECTION [mm]

TEST TIME [h]

□ TEST 1
△ TEST 2

*FIG. 8*

```
                    ┌─────────────┐
                    │    START    │
                    └──────┬──────┘
                           │←──────────────────┐
                    ┌──────┴──────────┐         │
                    │ MONITOR FLAKING │── S801   │
                    └──────┬──────────┘         │
                           │          S802      │
                        ╱──┴──╲                 │
                      ╱         ╲      NO        │
                    ╱ FLAKING    ╲───────────────┘
                    ╲ DETECTED?  ╱
                      ╲         ╱
                        ╲──┬──╱
                        YES │
    ┌──────────────────────┴──────────────────────────┐
    │ INPUT SHAPE OF FLAKING, SPECIFICATIONS OF BEARING,│── S803
    │           AND OPERATING CONDITIONS               │
    └──────────────────────┬──────────────────────────┘
    ┌──────────────────────┴──────────────────────────┐
    │ CALCULATE LOAD ON ROLLING ELEMENT PASSING        │── S804
    │       THROUGH OUTLET PORTION OF FLAKING          │
    └──────────────────────┬──────────────────────────┘
    ┌──────────────────────┴──────────────────────────┐
    │ CALCULATE CRACK PROPAGATION RATE TAKING INTO     │── S805
    │ ACCOUNT SHAPE OF PROGRESSING FLAKED PORTION      │
    └──────────────────────┬──────────────────────────┘
    ┌──────────────────────┴──────────────────────────┐
    │ CALCULATE REMAINING TIME UNTIL FLAKING           │── S806
    │       BECOMES DESIGNATED SHAPE                   │
    └──────────────────────┬──────────────────────────┘
            ┌──────────────┴──────────────┐
            │           OUTPUT            │── S807
            │    CALCULATION RESULT       │
            └──────────────┬──────────────┘
                    ┌───────┴───────┐
                    │     END       │
                    └───────────────┘
```

FIG. 9A

FIG. 9B

## FIG. 10A

## FIG. 10B

## FIG. 11A

## FIG. 11B

## INTERNATIONAL SEARCH REPORT

| International application No. |
|---|
| **PCT/JP2023/046723** |

**A. CLASSIFICATION OF SUBJECT MATTER**

*G01M 13/04*(2019.01)i; *F16C 33/58*(2006.01)i
FI:   G01M13/04; F16C33/58

According to International Patent Classification (IPC) or to both national classification and IPC

**B. FIELDS SEARCHED**

Minimum documentation searched (classification system followed by classification symbols)

G01M13/04; F16C33/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-143936 A (NTN CORPORATION) 24 September 2021 (2021-09-24) paragraphs [0024]-[0028], fig. 3-5 | 1-6 |
| A | JP 6844764 B2 (NSK LTD.) 17 March 2021 (2021-03-17) paragraph [0044] | 1-6 |
| A | JP 2020-143947 A (NTN CORPORATION) 10 September 2020 (2020-09-10) fig. 5 | 1-6 |
| A | WO 2021/117752 A1 (NTN CORPORATION) 17 June 2021 (2021-06-17) fig. 3 | 1-6 |
| A | JP 2014-142324 A (NTN CORPORATION) 07 August 2014 (2014-08-07) paragraphs [0029], [0104] | 1-6 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/046723** |

| Patent document cited in search report | | | Publication date (day/month/year) | Patent family member(s) | Publication date (day/month/year) |
| --- | --- | --- | --- | --- | --- |
| JP | 2021-143936 | A | 24 September 2021 | (Family: none) | |
| JP | 6844764 | B2 | 17 March 2021 | US 2022/0042879 A1 paragraph [0084] | |
| JP | 2020-143947 | A | 10 September 2020 | (Family: none) | |
| WO | 2021/117752 | A1 | 17 June 2021 | (Family: none) | |
| JP | 2014-142324 | A | 07 August 2014 | US 2015/0369698 A1 paragraphs [0049], [0123] EP 2940449 A1 CN 104884926 A | |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6844764 B
- JP 2017219469 A
- JP 2023002416 A